# EUROPÄISCHE PATENTSCHRIFT

(11) **EP 1 390 792 B1**
(45) Veröffentlichungstag und Bekanntmachung des Hinweises auf die Patenterteilung: **07.12.2005**
(21) Anmeldenummer: 02769478.5
(22) Anmeldetag: 11.05.2002
(51) Int. Cl.: G02B 7/00

(54) **POSITIONIEREINRICHTUNG**
POSITIONING DEVICE
SYSTEME DE POSITIONNEMENT

(30) Priorität: 14.05.2001 DE 10124563
(43) Veröffentlichungstag der Anmeldung: 25.02.2004
(73) Patentinhaber: Milasys GBR, 71093 Weil im Schönbuch (DE)
(72) Erfinder: HERGENHAN, Guido, 70374 Stuttgart (DE)
(74) Vertreter: Beck, Jürgen
(86) Internationale Anmeldenummer: PCT/EP2002/005203
(87) Internationale Veröffentlichungsnummer: WO 2002/093228

(56) Entgegenhaltungen:
- DE-A- 3 007 803
- DE-C- 19 542 223
- US-A- 4 522 365
- US-A- 6 095 697

## Beschreibung

Die Erfindung betrifft eine Positioniereinrichtung zur exakten Positionierung eines ersten optischen Bauelementes relativ zu einem zweiten optischen Bauelement.

Bei der Positionierung zweier optischer Bauelemente relativ zueinander ist insbesondere in Richtung quer zu einer optischen Achse eine möglichst hohe Präzision zu erreichen. Dies gilt besonders dann, wenn ein- oder zweidimensionale Anordnungen von optischen Bauelementen, sogenannten Arrays, relativ zueinander anzuordnen sind.

DE 30 07 803 A beschreibt eine Positioniereinrichtung zur Positionierung eines ersten optischen Bauelementes relativ zu einem zweiten optischen Bauelement dadurch gelöst, daß die Positioniereinrichtung ein erstes Fixierelement und mindestens ein zweites Fixierelement umfaßt, die durch eine Führung so relativ zueinander geführt sind, daß sie im wesentlichen nur in einer Einspannrichtung aufeinanderzu bewegbar sind und daß die Positioniereinrichtung mindestens ein zwischen diesen angeordnetes Trägerelement aufweist, dessen Position relativ zu den Fixierelementen in mindestens einer Richtung quer zur Einspannrichtung verändert sein kann und durch Einspannen zwischen den Fixierelementen fixierbar ist und daß die optischen Bauelemente an verschiedenen der relativ zueinander verschiebbaren Elemente gehalten sind.. Es besteht allerdings in DE 3007 803A nicht die Möglichkeit, die Position des Trägerelement relativ zu den Fixielementen zu justieren.

Der Erfindung liegt daher die Aufgabe zugrunde, eine Positioniereinrichtung zu schaffen, mit welcher sich optische Bauelemente relativ zueinander exakt und dauerhaft positionieren lassen und die außerdem eine relativ einfache Justierung erlaubt.

Diese Aufgabe wird erfindungsgemäß bei einer Positioniereinrichtung nach Anspruch 1 gelöst.

Die erfindungsgemäße Positioniereinrichtung schafft somit die Möglichkeit, durch das Anordnen des mindestens einen Trägerelements zwischen den beiden Fixierelementen einerseits das Trägerelement relativ zu den Flxierelementen in einer das Trägerelement nicht kraftschlüssig fixierenden Stellung der Fixierelemente zu justieren und dann durch Einspannen zwischen den Fixierelementen zu fixieren, wobei dadurch, daß die beiden, an dem Trägerelement anliegenden Fixierelemente durch die Führung gegen eine Bewegung quer zur Einspannrichtung blockiert sind, beim Einspannen des Trägerelementes keine Dejustierung desselben erfolgt so daß das Einspannen des Trägerelements zwischen den Fixierelementen die einmal erreichte Justiergenauigkeit nicht beeinträchtigt und folgllch Justiergenauigkeiten quer zur Einspannrichtung im Mikrometerbereich, vorzugsweise sogar im Submikrometerbereich, erreichbar sind.

Um die Trägerelemente justieren zu können, ist jedes Trägerelement mit einem Angriffselement versehen über welches eine Verbindung mit einer Justiereinrichtung herstellbar ist, wobei die Justiereinrichtung und die Fixierelemente vorzugsweise stationär zueinander angeordnet sind, so daß über die Justiereinrichtung eine Justierung durch Verschieben des Trägerelements relativ zu den Fixlerelementen möglich ist.

Um eine exakte Führung der beiden Fixierelemente relativ zueinander zu erreichen ist es besonders günstig, wenn nicht nur eine Führung vorgesehen ist, sondern wenn die Fixierelemente durch mehrere Führungen relativ zueinander geführt sind.

Insbesondere beim Vorsehen mehrerer Führungen ist es zweckmäßig, wenn eine der Führungen mindestens eine translatorische Bewegung quer zur Einspannrichtung blockiert.

Ferner ist es beim Vorsehen mehrerer Führungen vorteilhaft, wenn eine der Führungen eine Drehbewegung um eine zur Einspannrichtung parallele Drehachse blockiert.

Besonders günstig ist es, wenn die mehreren Führungen sowohl translatorische Bewegungen quer zur Einspannrichtung als auch Drehbewegungen um eine zur Einspannrichtung parallele Achse blockieren.

Hinsichtlich der Ausbildung der Führungen wurden im Zusammenhang mit der bisherigen Erläuterung der einzelnen Ausführungsbeispiele keine näheren Angaben gemacht.

Beispielsweise sind dabei als Führungen alle Arten von Führungen, wie beispielsweise Schwalbenschwanzführungen oder ähnliche Führungen denkbar.

Aus Gründen der konstruktiven Einfachheit hat es sich als besonders günstig erwiesen, wenn eine Führung durch einen Paßstift und eine Paßstiftaufnahme gebildet ist, wobei der Paßstift an einem Fixierelement und die Paßstiftaufnahme am anderen Fixierelement angeordnet sind.

Insbesondere bei mehreren Führungen hat es sich als vorteilhaft erwiesen, wenn eine Führung als Paßstift und Paßstiftaufnahme ausgebildet ist und die andere Führung in radialer Richtung zu der einen Führung einen Freiheitsgrad aufweist und nur in einer Querrichtung zur radialen Richtung eine exakte Führung bildet. Damit blockiert die eine Führung gegen translatorischen Bewegungen in einer quer zur Einspannrichtung verlaufenden Ebene und die andere Führung blockiert gegen rotatorische Bewegungen um die eine Führung, wobei eine geometrische Überbestimmung durch die zwei zusammenwirkenden Führungen verhindert wird.

Hinsichtlich der Fixierung des Trägerelements zwischen den Fixierelementen wurden bislang keine näheren Angaben gemacht. So wäre es denkbar, eine formschlüssige Fixierung des Trägerelements beispielsweise durch auf dieses wirkende Stellglieder, im einfachsten Fall in Form von Stellschrauben, vorzusehen.

Eine besonders günstige und insbesondere hinsichtlich der Dejustage beim Fixieren des Trägerelements vorteilhafte Lösung sieht vor, daß das Trägerelement zwischen den Fixierelementen kraftschlüssig fixierbar ist.

Eine derartige kraftschlüssige Fixierung des Trägerelements läßt sich konstruktiv besonders günstig dadurch erreichen, daß die Fixierelemente durch mindestens eine Spanneinrichtung in Einspannrichtung beaufschlagbar sind, wobei ein Justieren des Trägerelements bei gelöster Spanneinrichtung erfolgt.

Derartige Spanneinrichtungen können in unterschiedlichster Art und Weise realisiert werden.

Beispielsweise können derartige Spanneinrichtungen mittels federelastischer Elemente realisiert werden.

Besonders kostengünstig und vorteilhaft ist eine Lösung, bei welcher die Spanneinrichtung eine Spannschraube umfaßt.

Vorzugsweise ist die Spanneinrichtung stets seitlich neben den optischen Bauelementen angeordnet.

Prinzipiell wäre eine Spanneinrichtung zum Einspannen des Trägerelements zwischen den Fixierelementen ausreichend. Besonders günstig ist es jedoch, wenn mehrere Spanneinrichtungen vorgesehen sind, insbesondere wenn ein ungefähr gleichmäßiges Einspannen des Trägerelements durch die seitlich neben den optischen Bauelementen angeordneten Spanneinrichtungen erfolgen soll.

Ein derartiges Vorsehen von mehreren Spanneinrichtungen kann zu Problemen bei thermischen Ausdehnungen führen.

Aus diesem Grund ist es vorteilhaft, wenn die mehreren Spanneinrichtungen in der Art einer mehrzähligen Symmetrie zu einer Symmetrieachse angeordnet sind, so daß sich auch die miteinander verspannten Fixierelemente bei thermischer Ausdehnung symmetrisch zur Symmetrieachse verhalten.

Vorzugsweise ist dabei die Symmetrieachse so angeordnet, daß sie ungefähr parallel zur Einspannrichtung verläuft.

Ein zu einer Symmetrieachse symmetrisches Verhalten ist besonders dann günstig, wenn die Symmetrieachse durch die zueinander positionierbaren optischen Bauelemente verläuft, so daß sich das zur Symmetrieachse symmetrische Verhalten äußerst gering und wenn dann symmetrisch auf die optischen Bauelemente auswirkt.

Besonders zweckmäßig ist es, wenn die Symmetrieachse mit einer optischen Symmetrieachse der optischen Bauelemente zusammenfällt.

Einen besonders geringen negativen Einfluß thermischer Ausdehnungen auf die Justiergenauigkeit erhält man dann, wenn die Symmetrieachse parallel zu einer optischen Achse der optischen Bauelemente verläuft.

Hinsichtlich einer möglichst hohen Positionier- und Justiergenauigkeit hat es sich als besonders vorteilhaft erwiesen, wenn die Fixierelemente und das mindestens eine Trägerelement jeweils mit polierten Flächen aneinander anllegen, da in diesem Fall aufgrund der reduzierten Oberflächenrauhigkeit eine hohe Präzision bei der Justierung des Trägerelements relativ zu den Fixierelementen möglich ist,

Im Falle zweier Trägerelemente hat es sich aus denselben Gründen als vorteilhaft erwiesen, wenn die mehreren Trägerelemente ebenfalls mit polierten Flächen aneinander und an den Fixierelementen anliegen.

Das Angriffselement selbst kann in unterschiedlichster Art und Weise ausgebildet sein. Beispielsweise wäre es denkbar das Angriffselement selbst als Arm auszubilden, welches über die Fixierelemente übersteht und an welchem dann die Justiereinrichtung angreift.

Eine andere vorteilhafte Lösung sieht vor, daß das Angriffselement eine Aufnahme für einen Justierfinger der Justiereinrichtung ist.

Um einen vorteilhaften Zugang zu dem Angriffselement zu schaffen, ist vorzugsweise vorgesehen, daß dieses über einen Durchbruch in einem der Fixierelemente zugänglich ist, so daß nicht seitlich zwischen den Fixierelementen auf das Trägerelement eingewirkt werden muß, sondern durch eines der Fixierelemente hindurch auf das Trägerelement zum Justieren eingewirkt werden kann.

Die optischen Bauelemente können prinzipiell in unterschiedlichster Art und Weise angeordnet sein.

Beispielsweise ist ein Justieren zweier optischer Bauelemente relativ zueinander dadurch möglich, daß jedes der Bauelemente an einem Trägerelement angeordnet ist und die beiden Trägerelement relativ zueinander justiert und durch die Fixierelemente fixiert werden.

Eine andere vorteilhafte Möglichkeit sieht vor, daß eines der optischen Bauelemente an einem der Fixierelemente angeordnet ist und das andere an einem Trägerelement.

Noch vorteilhafter lassen sich bei mehreren relativ zueinander zu justierenden optischen Bauelemente alle optischen Bauelemente an den Trägerelemente anordnen oder vorzugsweise eines der optischen Bauelemente an einem der Fixierelemente, so daß die Zahl der Trägerelemente reduziert werden kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein erstes Ausführungsbeispiel einer erfindungsgemäßen Positioniereinrichtung;
- Fig. 2: einen Schnitt längs Linie 2-2 in Fig. 1;
- Fig. 3: einen Schnitt längs Linie 3-3 in Fig. 1;
- Fig. 4: einen Schnitt ähnlich Fig. 3 mitsamt einer zum Justieren des Trägerelements vorgesehenen Justiereinrichtung;
- Fig. 5: einen Schnitt ähnlich Fig. 3 mit auf ein Trägerelement einwirkendem Finger einer Justiereinrichtung;
- Fig. 6: einen Schnitt ähnlich Fig. 3 durch ein zweites Ausführungsbeispiel einer erfindungsgemäßen Positioniereinrichtung und
- Fig. 7: einen Schnitt ähnlich Fig. 3 durch ein drittes Ausführungsbeispiel einer Positioniereinrichtung.

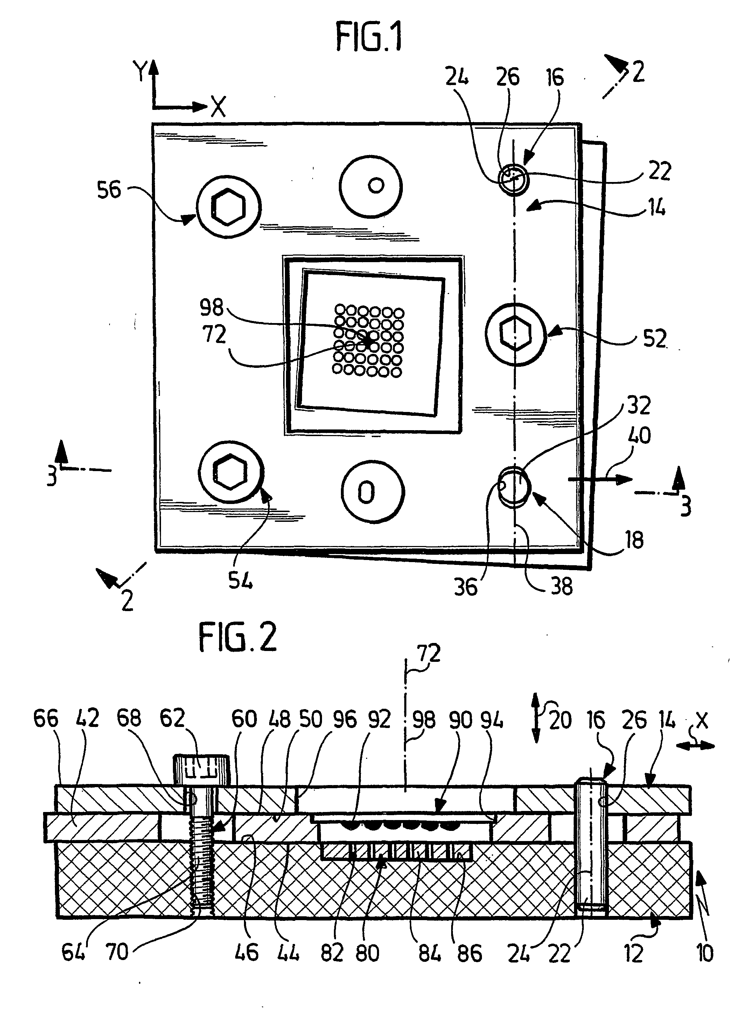

Ein erstes Ausführungsbeispiel einer erfindungsgemäßen Positioniereinrichtung, dargestellt in Fig. 1 bis 3 umfaßt eine als Ganzes mit 10 bezeichnete Fixiereinrichtung mit einem ersten Fixierelement 12 und einem zweiten Fixierelement 14, die beispielsweise plattenförmig ausgebildet sind und durch eine erste Führung 16 und eine zweite Führung 18 relativ zueinander derart fixiert sind, daß eine Relativbewegung lediglich in einer Einspannrichtung möglich ist.

Die erste Führung 16 besteht dabei vorzugsweise aus einem Paßstift 22, welcher beispielsweise fest im ersten Fixierelement 12 sitzt und sich mit seiner Längsachse 24 parallel zur Einspannrichtung in Richtung des zweiten Fixierelements 14 erstreckt und in eine Paßausnehmung 26 eingreift, welche im zweiten Fixierelement 14 angeordnet ist und beispielsweise dieses durchsetzt, so daß der Paßstift 22 ebenfalls von einer Seite in die Paßausnehmung 26 eintaucht und auf der gegenüberliegenden Seite übersteht.

Die zweite Führung 18 umfaßt ebenfalls einen Paßstift 32, welcher in dem ersten Fixierelement 12 festsitzend angeordnet ist und sich in Richtung des zweiten Fixierelements 14 erstreckt und dabei ebenfalls eine Paßausnehmung 36 im zweiten Fixierelement 14 durchsetzt.

Im Gegensatz zu der Paßausnehmung 26, die bezüglich der Längsachse 24 des Paßstifts 22 eine allseitige Führung des zweiten Fixierelements 14 relativ zum ersten Fixierelement 12 bildet, ist die Paßausnehmung 36 so ausgebildet, daß sie in Richtung einer radialen Richtung 38 zur Längsachse 24 des Paßstifts 22 keine Führung für das zweite Fixierelement 14 relativ zum Paßstift 32 darstellt, sondern lediglich das zweite Fixierelement 14 relativ zum Paßstift 32 in einer senkrecht zur radialen Richtung 38 verlaufenden Querrichtung 40 führt.

Durch das Vermeiden einer Führung des zweiten Fixierelements 14 in der radialen Richtung 38 wird eine Überbestimmtheit der Führung des zweiten Fixierelements 14 relativ zum ersten Fixierelement 12 durch die erste Führung 16 vermieden, so daß die zweite Führung 18 lediglich eine Führung des zweiten Fixierelements 14 gegen eine Drehung um den Paßstift 22 der ersten Führung 16 darstellt.

Somit ist insgesamt das zweite Fixierelement 14 relativ zum ersten Fixierelement 12 durch die erste Führung 16 und die zweite Führung 18 gegen eine Bewegung in sämtlichen senkrecht zur Einspannrichtung 20 verlaufenden Richtungen X und Y und zusätzlich noch gegen eine Drehung in der durch die Richtungen X und Y aufgespannten Ebene um eine senkrecht zu dieser und parallel zur Einspannrichtung 20 verlaufenden Achse gesichert und ausschließlich, und zwar präzise durch mindestens eine Paßführung, geführt in der Einspannrichtung 20 bewegbar.

Zwischen den Fixierelementen 12 und 14 der Fixiereinrichtung 10 ist ein als Ganzes mit 42 bezeichnetes Trägerelement angeordnet, welches einerseits mit einer ersten Führungsfläche 44 an einer Anlagefläche 46 des ersten Fixierelements 12 anliegt und andererseits mit einer zweiten Führungsfläche 48 an einer Anlagefläche 50 des zweiten Fixierelements 14 anliegt, wobei die Führungsfläche 44 und 48 und die Anlageflächen 46 bzw. 50 parallel zueinander, und insbesondere auch parallel zur X- und Y-Richtung, verlaufen.

Damit ist das Trägerelement 42 zwischen den Fixierelementen 12 und 14 in Richtung parallel zu den Führungsflächen 44, 48 und den Anlageflächen 46, 50, vorzugsweise in X- und Y-Richtung, geführt und durch die zwei Führungsflächen 44 und 48, die an entsprechenden Anlageflächen 46 und 50 der Fixierelemente 12 und 14 anliegen, durch diese ausgerichtet gehalten.

Vorzugsweise sind dabei sowohl die Führungsflächen 44 und 48 als auch die Anlageflächen 46 und 50 als polierte Flächen ausgebildet, die aufgrund ihrer geringen Oberflächenrauhigkeit ein präzises und in X- und Y-Richtung geführtes Verschieben des Trägerelements 42 relativ zu den Fixierelementen 12 und 14 zulassen.

Diese Verschiebbarkeit oder Justierbarkeit des Trägerelements 42 relativ zu den Fixierelementen 12 und 14, vorzugsweise in X- und Y-Richtung, ist nur solange möglich, so lange die Fixierelemente 12 und 14 nicht derart in Richtung aufeinanderzu kraftbeaufschlagt sind, daß eine kraftschlüssige Fixierung des Trägerelements 42 relativ zu den Fixierelementen 12 und 14 aufgrund der gegen die Anlageflächen 46 und 50 gepreßten Führungsflächen 44 und 48 entsteht.

Um das Trägerelement 42 einerseits relativ zu den Fixierelementen 12 und 14 verschieben und somit justieren zu können und andererseits das Trägerelement 42 relativ zu den Fixierelementen 12 und 14 festlegen zu können, sind beispielsweise drei Spanneinrichtungen 52, 54 und 56 vorgesehen, von denen jede eine Spannschraube 60 mit einem Schraubenkopf 62 und einem Gewindeabschnitt 64 umfaßt, wobei der Schraubenkopf 62 beispielsweise auf einer der Anlagefläche 50 abgewandten Oberseite 66 des zweiten Fixierelements 14 aufliegt, der Gewindeabschnitt 64 dann einen Durchbruch 68 im zweiten Fixierelement 14 durchsetzt und schließlich in eine Gewindebohrung 70 im ersten Fixierelement 12 eingeschraubt ist. Mit einer derartigen Spannschraube 60, die sich vorzugsweise parallel zur Einspannrichtung 20 erstreckt, lassen sich die Fixierelement 12 und 14 in der Einspannrichtung 20 in Richtung aufeinanderzu beaufschlagen und somit läßt sich das Trägerelement 42 zwischen den Fixierelementen 12 und 14 einspannen und dadurch kraftschlüssig relativ zu diesen fixieren.

Um eine möglichst gleichmäßige Beaufschlagung der Fixierelemente 12 und 14 und ein möglichst gleichmäßiges Einspannen des Trägerelements 42 zwischen diesen zu erreichen, sind die Spanneinrichtungen 52, 54 und 56 vorzugsweise in der Art einer mehrzähligen, in diesem Fall dreizähligen Symmetrie, zu einer Symmetrieachse 72 angeordnet, so daß sich auch bei einem Erwärmen die gesamte Positioniereinrichtung 10 im wesentlichen symmetrisch zur Symmetrieachse 72 verhält und gegebenenfalls symmetrisch zu dieser ausdehnt oder zu dieser symmetrische Spannungen ausbildet.

Das erste Ausführungsbeispiel der erfindungsgemäßen Positioniereinrichtung dient vorzugsweise dazu, ein als Ganzes mit 80 bezeichnetes Lichtquellen-Array von Halbleiteremittern 82, beispielsweise eine lineare oder zweidimensionale Anordnung derartiger Halbleiteremitter 82, die auf einem gemeinsamen Substrat 84 sitzen, das seinerseits beispielsweise in einer Aufnahme 86 im ersten Fixierelement 12 gehalten ist, relativ zu einem Optikarray 90 zu positionieren, welches beispielsweise für jeden Halbleiteremitter 82 eine kollimierende Abbildungsoptik 92 aufweist, wobei die Abbildungsoptiken 92 in einem Raster innerhalb des Optikarrays 90 angeordnet sind, welches genau dem Raster entspricht, in welchem die Halbleiteremitter 82 in dem Lichtquellen-Array 80 angeordnet sind.

Beispielsweise ist dabei das Optikarray 90 in einer Aufnahme 94 des Trägerelements 42 positioniert. Es besteht aber auch die Möglichkeit, das Trägerelement 42 so auszubilden, daß in diesen unmittelbar das Optikarray 90 mit den einzelnen Abbildungsoptiken 92 vorliegt.

Dabei sind die Spanneinrichtungen 52, 54, 56 so angeordnet, daß sie seitlich und außerhalb der optischen Bauelemente 80, 90 angeordnet sind.

Außerdem weist das zweite Fixierelement 14 eine Ausnehmung 96 auf, über welche Licht aus den Bauelementen 80, 90 austreten kann.

Vorzugsweise sind sowohl das Lichtquellen-Array 80 als auch das Optikarray 90 so angeordnet, daß diese symmetrisch zur Symmetrieachse 72 positioniert sind, so daß Wärmeausdehnungen oder Spannungen in der Positioniereinrichtung sich ebenfalls symmetrisch auf das Lichtquellen-Array 80 oder das Optikarray 90 auswirken.

Besonders günstig ist es, wenn das Lichtquellen-Array 80 und das Optikarray ebenfalls symmetrisch zur Symmetrieachse 72 ausgebildet sind und eine zu dieser zumindest parallel verlaufende optische Achse 98 aufweist.

Zur exakten Positionierung des Trägerelements 42 relativ zu den Fixierelementen 12 und 14 ist beispielsweise eines der Fixierelemente, vorzugsweise das Fixierelement 14, mit einem Durchbruch 100 versehen, und das Trägerelement 42 weist ein im Bereich des Durchbruchs 100 liegendes Angriffselement 102 auf, über welches ein Einwirken auf das Trägerelement 42 möglich ist, um dieses relativ zu den Fixierelementen 12 und 14 zu verschieben.

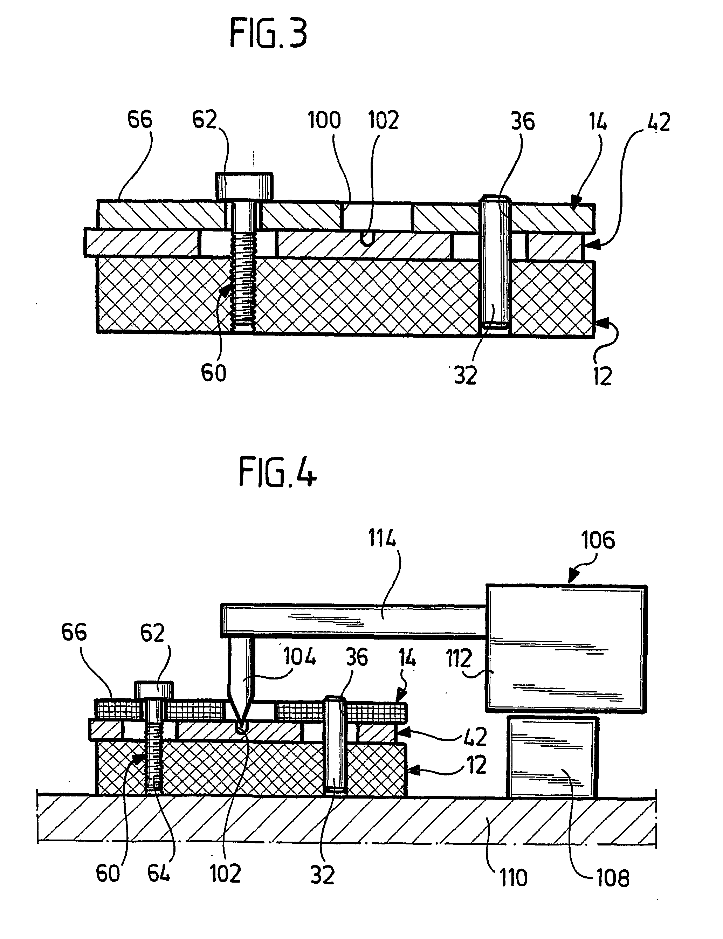

Das Angriffselement 102 ist beispielsweise als zum Durchbruch 100 hin offene Bohrung ausgebildet, mit welcher ein Finger 104 einer als Ganzes mit 106 bezeichneten und in Fig. 4 dargestellten Justiereinrichtung in Eingriff bringbar ist.

Die Justiereinrichtung 106 sitzt dabei beispielsweise mit einem Fuß 108 auf einer Basis 110, auf welcher auch das Fixierelement 12 festgelegt ist.

Ferner umfaßt die Justiereinrichtung 106 einen relativ zum Fuß 108 mit Präzisionsbewegungselementen bewegbaren Kopf 112, von welchem ein den Finger 104 tragender Arm 114 absteht, der die erfindungsgemäße Positioniereinrichtung übergreift und den Finger 104 so hält, daß dieser mit dem Angriffselement 102 in Wechselwirkung steht.

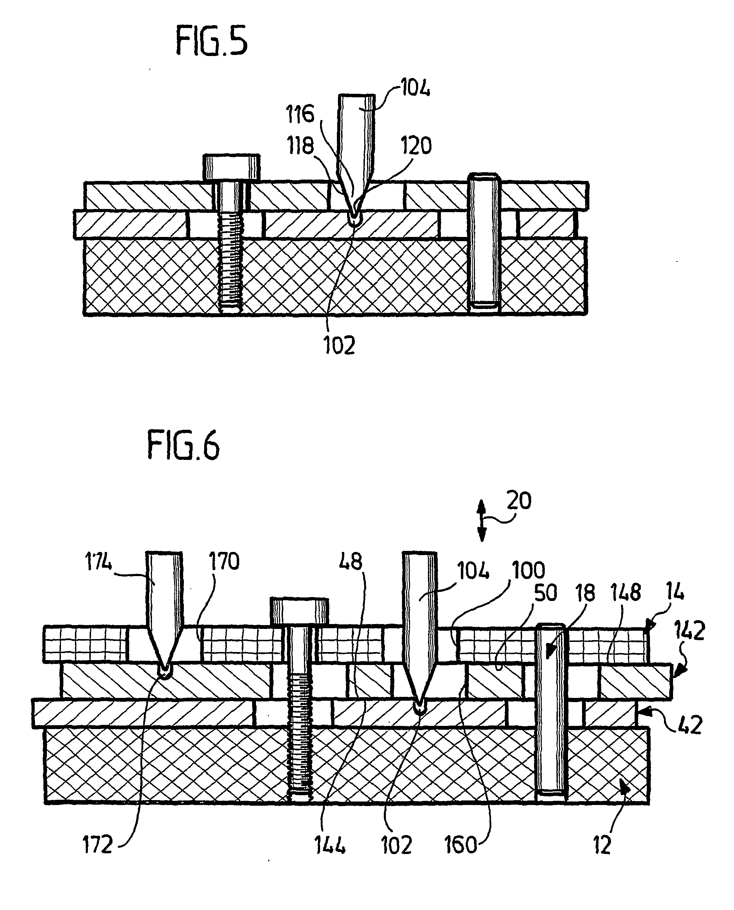

Vorzugsweise weist der Finger 104 dabei eine Spitze 116 auf, welche mit einer konischen Außenfläche 118 versehen ist und mit dieser konischen Außenfläche erfolgt eine Wechselwirkung zwischen der Spitze 116 und einer Außenwand 120 der das Angriffselement 102 bildenden Bohrung. (Fig. 5)

Sind nun sämtliche Spanneinrichtungen 52, 54 und 56 gelöst, so läßt sich das Trägerelement 42 zwischen den Fixierelementen 12 und 14 mittels der Justiereinrichtung 106 exakt relativ zum Fixierelement 12 justieren und damit erfolgt auch gleichzeitig eine exakte Justierung des Optikarrays 90 relativ zum Lichtquellen-Array 80 der Halbleiteremitter 82, wobei beispielsweise die exakte Justierung des Optikarrays 90 relativ zum Lichtquellen-Array 80 optisch durch überprüfbar, gegebenenfalls durch die optische Emission von einem oder mehreren der Halbleiteremitter 82 steuerbar ist.

Die Justierung erfordert dabei nicht nur eine präzise Positionierung des Trägerelements 42 in den X- und Y-Richtungen, sondern gleichzeitig auch eine hinsichtlich der Drehung in der X-Y-Ebene, beispielsweise eine Drehung um die Symmetrieachse 72, exakte Positionierung, so daß jedem Halbleiteremitter 82 exakt positioniert die entsprechende Abbildungsoptik 92 zugeordnet ist.

Besonders vorteilhaft läßt sich dabei die Positionierung der Trägerplatte 42 dann durchführen, wenn - wie bereits erwähnt - die Führungsflächen 44 und 48 sowie die entsprechenden Anlageflächen 46 bzw. 50 polierte Flächen sind, so daß die Oberflächenrauhigkeit derart gering ist, daß diese die Positioniergenauigkeit nicht behindert und somit beispielsweise eine Positioniergenauigkeit im Submikrometerbereich erreichbar ist.

Nach der exakten Positionierung der Trägerplatte 42 relativ zu den Fixierelementen 12 und 14 erfolgt ein Festziehen der Spanneinrichtungen 52, 54 und 56, in diesem Fall durch Festdrehen der Spannschrauben 60, und somit die kraftschlüssige Fixierung des Trägerelements 42 durch die Flächenpressung im Bereich der Führungsflächen 44 und 48 und der entsprechenden an diesen anliegenden Anlageflächen 46 bzw. 50, so daß das Trägerelement 42 relativ zu den Fixierelementen 12 und 14 dauerhaft fixierbar ist.

Bei diesem Festdrehen der Spannschrauben 60 der Spanneinrichtungen 52, 54 und 56 wird nun eine Dejustierung des Trägerelements 42, beispielsweise relativ zum Fixierelement 12, dadurch vermieden, daß die Spannschrauben 60 mit ihrem Schraubenkopf 62 nicht unmittelbar auf das Trägerelement 42 wirken, sondern auf das Fixierelement 14, und außerdem wird durch die exakte Führung des Fixierelements 14 gegen alle Bewegungen in X- und Y-Richtungen sowie Drehungen in der durch diese X- und Y-Richtungen aufgespannten Ebene jegliche die Präzision der Positionierung des Trägerelements 42 relativ zum Fixierelement 12 beeinträchtigende Störung vermieden, da die durch die Schraubenköpfe 62 auf das Fixierelement 14 im Sinne von Verschiebungen in den X- und Y-Richtungen und Drehungen in der durch die X-und Y-Richtungen aufgespannten Ebene wirkende Kräfte durch die Führungen 16 und 18 aufgenommen werden und sich somit nicht auf das Trägerelement 42 übertragen.

Somit kann die durch die Justiereinrichtung 106 einmal festgelegte Position des Trägerelements 42 relativ zum Fixierelement 12 auch beim Festziehen der Spannschrauben 60 aufrecht erhalten werden und nach Festlegen des Trägerelements 42 kann der Finger 104 außer Eingriff mit dem Angriffselement 102 kommen, da die erfindungsgemäße Positioniereinrichtung die Position des Trägerelements 42 relativ zum Fixierelement 12 dauerhaft aufrecht erhält.

Bei einem zweiten Ausführungsbeispiel einer erfindungsgemäßen Positioniereinrichtung, dargestellt in Fig. 6, sind diejenigen Teile, die mit denen des ersten Ausführungsbeispiels identisch sind, mit denselben Bezugszeichen versehen, so daß hinsichtlich der Beschreibung desselben vollinhaltlich auf die Ausführungen zum ersten Ausführungsbeispiel Bezug genommen werden kann.

Im Gegensatz zum ersten Ausführungsbeispiel ist nicht nur ein Trägerelement 42 zwischen den Fixierelementen 12 und 14 vorgesehen, sondern es sind zwei Trägerelemente, nämlich das Trägerelement 42 und ein Trägerelement 142, zwischen den Fixierelementen 12 und 14 vorgesehen, die beispielsweise unmittelbar aufeinanderliegen, so daß die zweite Führungsfläche 48 des Trägerelements 42 an einer ersten Führungsfläche 144 des Trägerelements 142 anliegt und die zweite Führungsfläche 148 des Trägerelements 142 an der Anlagefläche 50 des zweiten Fixierelements 14 anliegt.

Dabei sind in gleicher Weise wie beim ersten Ausführungsbeispiele sämtliche aneinander anliegenden Flächen poliert.

Auch beim zweiten Ausführungsbeispiel sind das erste Fixierelement 12 und das zweite Fixierelement 14 durch zwei Führungen 16 und 18 relativ zueinander fixiert, so daß die Fixierelemente 12 und 14 auch beim zweiten Ausführungsbeispiel der erfindungsgemäßen Positioniereinrichtung lediglich in der Einspannrichtung 20 relativ zueinander bewegbar sind.

Um nun die Möglichkeit zu eröffnen, beide Trägerelemente 42 und 142 gleichzeitig exakt relativ zueinander und exakt relativ zum Fixierelement 12 zu positionieren, ist in gleicher Weise wie beim ersten Ausführungsbeispiel das Trägerelement 42 mit dem Angriffselement 102 versehen, allerdings ist zusätzlich zum Durchbruch 100 im zweiten Fixierelement 14 noch zusätzlich ein Durchbruch 160 im Trägerelement 142 vorzusehen, wenn dieses zwischen dem Trägerelement 42 und dem Fixierelement 14 liegt, so daß der Finger 104 durch die Durchbrüche 100 und 160 hindurchgreifen kann und mit dem Angriffselement 102 in Wechselwirkung treten kann.

Darüber hinaus ist das zweite Fixierelement 14 mit einem weiteren Durchbruch 170 versehen und das Trägerelement 142 mit einem eigenen Angriffselement 172, mit welchem ein zusätzlicher Finger 174 einer weiteren Justiereinrichtung in Eingriff bringbar ist, wobei der weitere Finger 174 durch den Durchbruch 170 hindurch auf das Angriffselement 172 zugreifen kann.

Die Justierung der Trägerelemente 42 und 142 erfolgt nun durch zwei unabhängig voneinander arbeitende Justiereinrichtungen für die Finger 104 und 174, so daß jedes der Trägerelemente 42 und 142 exakt relativ zum Fixierelement 12 justierbar ist und auch die beiden Trägerelemente 42 und 142 exakt zueinander justierbar sind.

Bei dem zweiten Ausführungsbeispiel der erfindungsgemäßen Positioniereinrichtung ist es nun denkbar, in gleicher Weise wie beim ersten Ausführungsbeispiel zwei optische Bauelemente relativ zueinander zu positionieren, wobei beispielsweise eines der Bauelemente an dem einen der Träger 42 und 142 angeordnet sein kann und das andere der Bauelemente in dem anderen der Träger 142, 42.

Es ist aber auch möglich, mit dem zweiten Ausführungsbeispiel der erfindungsgemäßen Positioniereinrichtung insgesamt drei optische Bauelemente relativ zueinander exakt zu positionieren, wobei eines der Bauelemente in einem der Fixierelemente 12 oder 14 angeordnet ist und die Träger 42 und 142 ebenfalls jeweils noch ein optisches Bauelement tragen, so daß durch deren exakte Positionierung die insgesamt drei optischen Bauelemente exakt relativ zueinander positionierbar sind.

Durch die Durchbrüche 100 und 170 in dem einen der Fixierelemente 12, 14 und den weiteren Durchbruch 160, ist es möglich, von derselben Seite der Positioniereinrichtung her auf beide Trägerelemente 42, 142 einzuwirken, um diese zu justieren.

Im übrigen wird hinsichtlich Aufbau, Funktion und Justierung des zweiten Ausführungsbeispiels der erfindungsgemäßen Positioniereinrichtung vollinhaltlich auf die Ausführungen zum ersten Ausführungsbeispiel Bezug genommen.

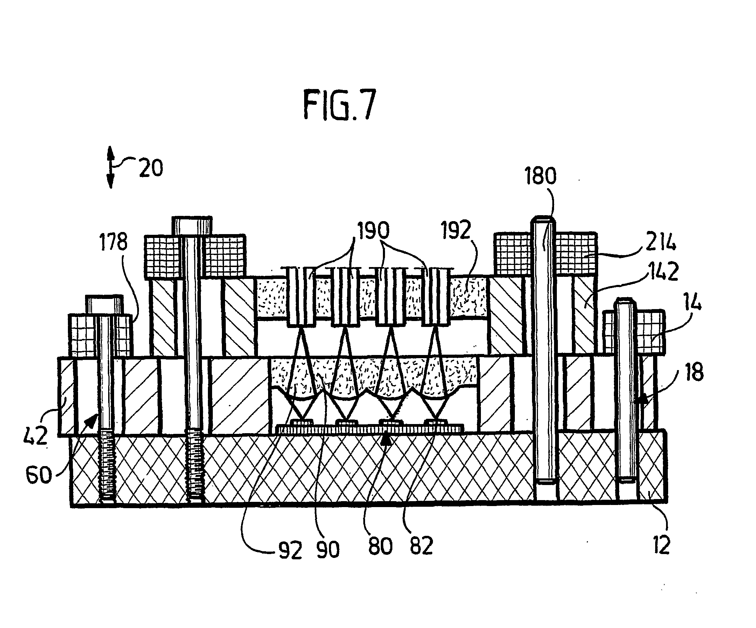

Bei einem dritten Ausführungsbeispiel der erfindungsgemäßen Positioniereinrichtung, dargestellt in Fig. 7, sind diejenigen Teile, die mit denen des ersten und zweiten Ausführungsbeispiels identisch sind, mit denselben Bezugszeichen versehen, so daß hinsichtlich der Beschreibung derselben ebenfalls auf die Ausführungen zum ersten Ausführungsbeispiel und zum zweiten Ausführungsbeispiel Bezug genommen werden kann.

Im Gegensatz zu den voranstehenden Ausführungsbeispielen ist bei dem dritten Ausführungsbeispiel der erfindungsgemäßen Positioniereinrichtung, dargestellt in Fig. 7, zusätzlich zum ersten Fixierelement 12 und zum zweiten Fixierelement 14 ein weiteres zweites Fixierelement 214 vorgesehen.

Das Fixierelement 12 und das Fixierelement 14 sind ebenfalls durch Führungen 16, 18, in gleicher Weise wie beim ersten Ausführungsbeispiel beschrieben, so geführt, daß diese relativ zueinander lediglich in Einspannrichtung 20 bewegbar sind, wobei in gleicher Weise wie beim ersten Ausführungsbeispiel beschrieben, das Trägerelement 42 zwischen diesen einspannbar und nach einer Justierung fixierbar ist.

Zusätzlich sitzt auf dem ersten Trägerelement 42, und zwar innerhalb einer Öffnung 178 im Fixierelement 14, das Trägerelement 142, welches außerdem auf dem Trägerelement 42 aufsitzt, wobei das Fixierelement 14 das Trägerelement 142 umschließt, jedoch so, daß das Trägerelement 142 noch innerhalb der Öffnung 178 relativ zum Fixierelement 14 bewegbar ist.

Somit wirkt das Fixierelement 14 lediglich auf einen Außenbereich des Trägerelements 42 und ist somit nur in der Lage, das Trägerelement 42 zwischen sich und dem Fixierelement 12 in seinem Außenbereich einzuspannen.

Darüber hinaus liegt auf dem Trägerelement 42, und zwar innerhalb des Fixierelements 14, das weitere Trägerelement 142 auf und somit liegen beide Trägerelemente 42 und 142 zwischen dem Fixierelement 12 und dem weiteren zweiten Fixierelement 214, welches ebenfalls durch Führungen, beispielsweise die Führung 180, relativ zum Fixierelement 12 exakt geführt und lediglich in Einspannrichtung 20 bewegbar ist.

Somit besteht die Möglichkeit, zunächst das Trägerelement 42 relativ zum Fixierelement 12 exakt zu justieren und dann dauerhaft relativ zu diesem zu fixieren und zwar durch Zusammenwirken der Fixierelemente 12 und 14 und anschließend das Trägerelement 142 relativ zum Trägerelement 42 und zum Fixierelement 12 zu justieren und dann dauerhaft durch Zusammenwirken der Fixierelemente 12 und 214 zu positionieren.

Beispielsweise trägt bei diesem dritten Ausführungsbeispiel der erfindungsgemäßen Positioniereinrichtung das Fixierelement 12 das Lichtquellen-Array 80 mit den Halbleiteremittern 82, das Trägerelement 42 trägt das Optikarray 90 mit den Abbildungsoptiken 92 für jeden der Halbleiteremitter 82 und das Trägerelement 142 trägt ein Array von Lichtleitern 190, die in einem Lichtleiterhalter 192 sitzen und ebenfalls im gleichen Raster wie die Abbildungsoptiken 92 angeordnet sind, so daß beispielsweise dadurch die Strahlung der Halbleiteremitter 82 über die einzelnen Abbildungsoptiken 92 in die einzelnen Lichtleiter 190 direkt einkoppelbar ist, wobei in diesem Fall die Abbildungsoptiken 92 keine kollimierenden Optiken sind, sondern Optiken, die aus den Halbleiteremittern 82 austretende Strahlung in die Lichtleiter 190 fokussieren.

## Patentansprüche

1. Positioniereinrichtung zur exakten Positionierung eines ersten optischen Bauelements:(80) relativ zu einem zweiten optischen Bauelement (90; 190°) umfassend ein erstes Fixierelement. (12) und mindestens ein zweites Fixierelement (14), die durch eine Führung (16, 18) so relativ zueinander geführt sind, daß sie in einer Einspannrichtung (20) aufeinanderzu bewegbar sind, und mindestens ein zwischen diesen Fixierelementen (12, 14, Z14) angeordnetes Trägerelement (42; 142), dessen Position relativ zu den Fixierelementen (12, 14, 214) in mindestens einer Richtung (X, Y) quer zur Einspannrichtung (20) vorwiderbar und durch Einspannen zwischen den Fixierelementen (12, 14, 214) fixierbar ist, wobei die optischen Bauelemente (80, 90, 190) an verschiedenen der relativ zueinander verschiebbaren Elemente (12, 42, 142) gehalten sind,
**dadurch gekennzeichnet, daß** jedes Trägerelement (42, 142) mit einem Angriffselement (102, 172) versehen ist, über welches eine Verbindung mit einer Justiereinrichtung (106) herstellbar ist, mit welcher die Justierung des Trägerelements (42, 142) relativ zu den Fixierelementen (12,14, 214) ausführbar ist.

2. Positioniereinrichtung nach Anspruch 1, **dadurch gekennzeichnet** deß die Fixiereiermente (12, 14, 142) durch-mehrere Führungen (16, 18) relativ zueinander gerührt sind.

3. Positioniereinrichtung nach Anspruch 1 oder 2, **dadurch gekennzeichnet, daß** eine der Führungen (16) mindestens eine translatorische Bewegung quer zur Einspannrichtung (20) blockiert.

4. Positioniereinrichtung nach einem der voranstehenden Ansprüche, **dadurch gekennzeichnet, daß** eine der Führungen (18) eine Drehbewegung um eine zur Einspannrichtung (20) parallele Drehachse blockiert.

5. Positioniereinrichtung nach einem der voranstehenden Ansprüche, **dadurch gekennzeichnet, daß** eine Führung (16, 18) durch einen Paßstift (22, 32) und eine Paßstiftaufnahme (26, 36) gebildet ist, wobei der Paßstift (22, 32) an einem Fixierelement (12) und die Paßstiftaufnahme (26, 36) am anderen Fixierelement (14, 214) angeordnet sind.

6. Positioniereinrichtung nach Anspruch 5, **dadurch gekennzeichnet, daß** bei mehreren Führungen (16, 18) eine Führung (16) als Paßstift (22) und PaBstiftaufnahme (26) ausgebildet ist und die andere Führung (18) in radialer Richtung (38) zu der einen Führung (16) einen Freiheitsgrad aufweist und nur in einer Querrichtung (40) zur radialen Richtung (38) eine exakte Führung bildet.

7. Positioniereinrichtung nach einem der voranstehenden Ansprüche, **dadurch gekennzeichnet, daß** das Trägerelement (42, 142) zwischen den Fixierelementen (12, 14, 214) kraftschlüssig fixierbar ist.

8. Positioniereinrichtung nach einem der voranstehenden Ansprüche, **dadurch gekennzeichnet, daß** die Fxierelemente (12, 14, 214) durch mindestens eine Spanneinrichtung (52, 54, 56) in Einspannrichtung (20) beaufschlagbar sind.

9. Positioniereinrichtung nach Anspruch 8, **dadurch gekennzeichnet, daß** die Spanneinrichtung (52, 54, 56) eine Spannschraube (60) umfaßt.

10. Positioniereinrichtung nach Anspruch 8 oder 9, **dadurch gekennzeichnet, daß** mehrere Spanneinrichtungen (52, 54, 56) vorgesehen sind.

11. Positioniereinrichtung nach Anspruch 10, **dadurch gekennzeichnet, daß** die mehreren Spanneinrichtungen (52, 54, 56) in der Art einer mehrzähligen Symmetrie zu einer Symmetrieachse (72) angeordnet sind.

12. Positioniereinrichtung nach Anspruch 11, **dadurch gekennzeichnet, daß** die Symmetrieachse (72) ungefähr parallel zur Einspannrichtung (20) verläuft.

13. Positioniereinrichtung nach Anspruch 11 oder 12, **dadurch gekennzeichnet, daß** die Symmetrieachse (72) durch die zueinander positionierbaren optischen Bauelemente (80, 90, 190) verläuft.

14. Positioniereinrichtung nach einem der voranstehenden Ansprüche, **dadurch gekennzeichnet, daß** die Fixierelemente (12, 14, 214) und das mindestes eine Trägerelement (42, 142) jeweils mit polierten Flächen (44, 46, 48, 50) aneinander anliegen.

15. Positioniereinrichtung nach einem der voranstehenden Ansprüche, **dadurch gekennzeichnet, daß** zwischen den Fixierelementen (12, 14, 214) mindestens zwei Trägerelemente (42, 142) angeordnet sind.

16. Positioniereinrichtung nach Anspruch 15, **dadurch gekennzeichnet, daß** die mindestens zwei Trägerelemente (42, 142) mit polierten Flächen (48, 144) aneinander anliegen.

17. Positioniereinrichtung nach einem der voranstehenden Ansprüche, **dadurch gekennzeichnet, daß** das Angriffseiement (102, 172) eine Aufnahme für einen Justierfinger (104, 174) der Justiereinrichtung (106) ist.

18. Positioniereinrichtung nach einem voranstehenden Ansprüche, **dadurch gekennzeichnet, daß** das Angriffselement (102, 172) über einen Durchbruch (100, 170) in einem der Fixierelemente (14) zugänglich ist.

19. Positioniereinrichtung nach einem der voranstehenden Ansprüche, **dadurch gekennzeichnet, daß** eines der optischen Bauelemente (80) an einem Fixierelement (12) und das andere (90, 190) an mindestens einem Trägerelement (42, 142) angeordnet ist.

## Claims

1. Positioning device for the exact positioning of a first optical component (80) relative to a second optical component (90, 190), comprising a first fixing element (12) and at least one second fixing element (14) guided relative to one another by a guide means (16, 18) such that they are movable towards one another in a clamping direction (20) and at least one support element (42, 142) arranged between these fixing elements (12, 14, 214), the position of said support element relative to the fixing elements (12, 14, 214) being adapted to be altered in at least one direction (X, Y) transversely to the clamping direction (20) and being adapted to be fixed between the fixing elements (12, 14, 214) as a result of clamping, wherein the optical components (80, 90, 190) are held on different ones of the elements (12, 42, 142) displaceable relative to one another,
**characterized in that** each support element (42, 142) is provided with a contact element (102, 172), a connection to an adjusting device (106) being provided via said contact element, the adjustment of the support element (42, 142) relative to the fixing elements (12, 14, 214) being carried out with said adjusting device.

2. Positioning device as defined in claim 1, **characterized in that** the fixing elements (12, 14, 142) are guided relative to one another by several guide means (16, 18).

3. Positioning device as defined in claim 1 or 2, **characterized in that** one of the guide means (16) blocks at least any translational movement transversely to the clamping direction (20).

4. Positioning device as defined in any one of the preceding claims, **characterized in that** one of the guide means (18) blocks any rotational movement about an axis of rotation parallel to the clamping direction (20).

5. Positioning device as defined in any one of the preceding claims, **characterized in that** a guide means (16, 18) is formed by an alignment pin (22, 32) and an alignment pin receiving means (26, 36), wherein the alignment pin (22, 32) is arranged on one fixing element (12) and the alignment pin receiving means (26, 36) on the other fixing element (14, 214).

6. Positioning device as defined in claim 5, **characterized in that** in the case of several guide means (16, 18) one guide means (16) is designed as an alignment pin (22) and alignment pin receiving means (26) and the other guide means (18) has a degree of freedom in a radial direction (38) in relation to the one guide means (16) and forms an exact guide means only in a transverse direction (40) in relation to the radial direction (38).

7. Positioning device as defined in any one of the preceding claims, **characterized in that** the support element (42, 142) is adapted to be fixed in a force-locking manner between the fixing elements (12, 14, 214).

8. Positioning device as defined In any one of the preceding claims, **characterized in that** the fixing elements (12, 14, 214) are adapted to be acted upon in a clamping direction (20) by at least one clamping device (52, 54, 56).

9. Positioning device as defined in claim 8, **characterized in that** the clamping device (52, 54, 56) comprises a tightening screw (60).

10. Positioning device as defined in claim 8 or 9, **characterized in that** several clamping devices (52, 54, 56) are provided.

11. Positioning device as defined in claim 10, **characterized in that** the several clamping devices (52, 54, 56) are arranged In a type of multiple symmetry in relation to an axis of symmetry (72).

12. Positioning device as defined in claim 11, **characterized in that** the axis of symmetry (72) extends approximately parallel to the clamping direction (20).

13. Positioning device as defined in claim 11 or 12, **characterized in that** the axis of symmetry (72) extends through the optical components (80, 90, 190) positionable relative to one another.

14. Positioning device as defined in any one of the preceding claims,
**characterized in that** the fixing elements (12, 14, 214) and the at least one support element (42, 142) abut on one another with respective polished surfaces (44, 46, 48, 50).

15. Positioning device as defined in any one of the preceding claims, **characterized in that** at least two support elements (42, 142) are arranged between the fixing elements (12, 14, 214).

16. Positioning device as defined in claim 15, **characterized in that** the at least two support elements (42, 142) abut on one another with polished surfaces (48, 144).

17. Positioning device as defined in any one of the preceding claims, **characterized in that** the contact element (102, 172) is a receiving means for an adjusting finger (104, 174) of the adjusting device (106).

18. Positioning device as defined in any one of the preceding claims, **characterized in that** the contact element (102, 172) is accessible via an opening (100, 170) in one of the fixing elements (14).

19. Positioning device as defined in any one of the preceding claims, **characterized in that** one of the optical components (80) is arranged on one fixing element (12) and the other one (90, 190) on at least one support element (42, 142).

## Revendications

1. Dispositif de positionnement pour le positionnement exact d'un premier composant (80) optique par rapport à un second composant (90, 190) optique, comprenant un premier élément de fixation (12) et au moins un second élément de fixation (14), qui sont guidés par un guide (16, 18) l'un par rapport à l'autre de telle sorte qu'ils peuvent se déplacer l'un vers l'autre dans un sens de serrage (20), et au moins un élément porteur (42, 142) disposé entre ces éléments de fixation (12, 14, 214), dont la position par rapport aux éléments de fixation (12, 14, 214) peut être modifiée dans au moins une direction (X, Y) transversalement au sens de serrage (20) et peut être fixé par le serrage entre les éléments de fixation (12, 14, 214), les composants (80, 90, 190) optiques étant maintenus sur plusieurs des éléments (12, 42, 142) pouvant être déplacés les uns par rapport aux autres,
**caractérisé en ce que** chaque élément porteur (42, 142) est doté d'un élément d'application (102, 172), par lequel une liaison avec un dispositif d'ajustage (106) peut être établie, avec lequel l'ajustage de l'élément porteur (42, 142) par rapport aux éléments de fixation (12, 14, 214) peut être réalisé.

2. Dispositif de positionnement selon la revendication 1, **caractérisé en ce que** les éléments de fixation (12, 14, 142) sont guidés les uns par rapport aux autres par plusieurs guides (16, 18).

3. Dispositif de positionnement selon la revendication 1 ou 2, **caractérisé en ce que** l'un des guides (16) bloque au moins un mouvement de translation transversalement au sens de serrage (20).

4. Dispositif de positionnement selon l'une quelconque des revendications précédentes, **caractérisé en ce que** l'un des guides (18) bloque un déplacement de rotation autour d'un axe de rotation parallèle au sens de serrage (20).

5. Dispositif de positionnement selon l'une quelconque des revendications précédentes, **caractérisé en ce qu'**un guide (16, 18) est formé par une goupille d'assemblage (22, 32) et un logement de goupille d'assemblage (26, 36), la goupille d'assemblage (22, 32) et le logement de goupille d'assemblage (26, 36) étant disposés respectivement sur un élément de fixation (12) et sur l'autre élément de fixation (14, 214).

6. Dispositif de positionnement selon la revendication 5, **caractérisé en ce que**, en cas de plusieurs guides (16, 18), un guide est conçu comme goupille d'assemblage (22) et logement de goupille d'assemblage (26) et l'autre guide (18) présente un degré de liberté dans le sens radial (38) par rapport à un guide (16) et forme un guide précis seulement dans une direction transversale (40) à la direction (38) radiale.

7. Dispositif de positionnement selon l'une quelconque des revendications précédentes, **caractérisé en ce que** l'élément porteur (42, 142) peut être fixé par adhérence des forces entre les éléments de fixation (12, 14, 214).

8. Dispositif de positionnement selon l'une quelconque des revendications précédentes, **caractérisé en ce que** les éléments de fixation (12, 14, 214) peuvent être sollicités par au moins un dispositif de serrage (52, 54, 56) dans le sens de serrage (20).

9. Dispositif de positionnement selon la revendication 8, **caractérisé en ce que** le dispositif de serrage (52, 54, 56) comprend une vis de serrage (60).

10. Dispositif de positionnement selon la revendication 8 ou 9, **caractérisé en ce** plusieurs dispositifs de serrage (52, 54, 56) sont prévus.

11. Dispositif de positionnement selon la revendication 10, **caractérisé en ce que** les plusieurs dispositifs de serrage (52, 54, 56) sont disposés à la façon d'une symétrie à plusieurs chiffres par rapport à un axe de symétrie (72).

12. Dispositif de positionnement selon la revendication 11, **caractérisé en ce que** l'axe de symétrie (72) est agencé à peu près parallèlement au sens de serrage (20).

13. Dispositif de positionnement selon la revendication 11 ou 12, **caractérisé en ce que** l'axe de symétrie (72) passe par les composants (80, 90, 190) optiques pouvant être positionnés les uns par rapport aux autres.

14. Dispositif de positionnement selon l'une quelconque des revendications précédentes, **caractérisé en ce que** les éléments de fixation (12, 14, 214) et le au moins un élément porteur (42, 142) s'appuient les uns sur les autres respectivement avec des surfaces (44, 46, 48, 50) polies.

15. Dispositif de positionnement selon l'une quelconque des revendications précédentes, **caractérisé en ce que** au moins deux éléments porteurs (42, 142) sont disposés entre les éléments de fixation (12, 14, 214) .

16. Dispositif de positionnement selon la revendication 15, **caractérisé en ce que** les au moins deux éléments porteurs (42, 142) s'appuient les uns sur les autres avec des surfaces (48, 144) polies.

17. Dispositif de positionnement selon l'une quelconque des revendications précédentes, **caractérisé en ce que** l'élément d'application (102, 172) est un logement pour un doigt d'ajustage (104, 174) du dispositif d'ajustage (106).

18. Dispositif de positionnement selon l'une quelconque des revendications précédentes, **caractérisé en ce que** l'élément d'application (102, 172) est accessible par un passage (100, 170) dans l'un des éléments de fixation (14).

19. Dispositif de positionnement selon l'une quelconque des revendications précédentes, **caractérisé en ce que** l'un des composants (80) optiques et l'autre (90, 190) sont disposés respectivement sur un élément de fixation (12) et sur au moins un élément porteur (42, 142)
